Europäisches Patentamt

European Patent Office

Office européen des brevets

(11) Publication number: **0 137 267**
**B1**

# EUROPEAN PATENT SPECIFICATION

(45) Date of publication of patent specification: **02.08.89**

(51) Int. Cl.⁴: **G 11 B 5/31, G 11 B 5/39**

(21) Application number: **84110135.5**

(22) Date of filing: **24.08.84**

(54) **Thin film magnetic transducer head.**

(30) Priority: **29.08.83 JP 157647/83**

(43) Date of publication of application:
**17.04.85 Bulletin 85/16**

(45) Publication of the grant of the patent:
**02.08.89 Bulletin 89/31**

(84) Designated Contracting States:
**DE FR GB NL**

(56) References cited:
**GB-A-2 095 888**
**US-A-4 016 601**

**Electronic Design, Sept. 30, 1981, p. 67-76**

(73) Proprietor: **SONY CORPORATION**
**7-35 Kitashinagawa 6-Chome Shinagawa-ku**
**Tokyo 141 (JP)**

(72) Inventor: **Imakoshi, Shigeyoshi**
**c/o Sony Corporation 7-35 Kitashinagawa 6-chome**
**Shinagawa-ku Tokyo (JP)**
Inventor: **Soda, Yutaka**
**c/o Sony Corporation 7-35 Kitashinagawa 6-chome**
**Shinagawa-ku Tokyo (JP)**
Inventor: **Suyama, Hideo**
**c/o Sony Corporation 7-35 Kitashinagawa 6-chome**
**Shinagawa-ku Tokyo (JP)**

(74) Representative: **Patentanwälte TER MEER -**
**MÜLLER - STEINMEISTER**
**Mauerkircherstrasse 45**
**D-8000 München 80 (DE)**

Courier Press, Leamington Spa, England.

## Description

The present invention relates to a thin film type magnetic transducer head in combination with a magnetic medium travelling at a relative velocity v to said magnetic transducer head and comprising recordings with the frequency $f_m$ being the frequency of half of the transmission rate, said transducer head comprising a magnetic substrate a thin-film magnetic core formed on said substrate and an effective magnetic gap at one end of said substrate facing to said travelling magnetic recording medium, said magnetic substrate and said thin film magnetic core forming a magnetic circuit to reproduce signals on said travelling magnetic medium.

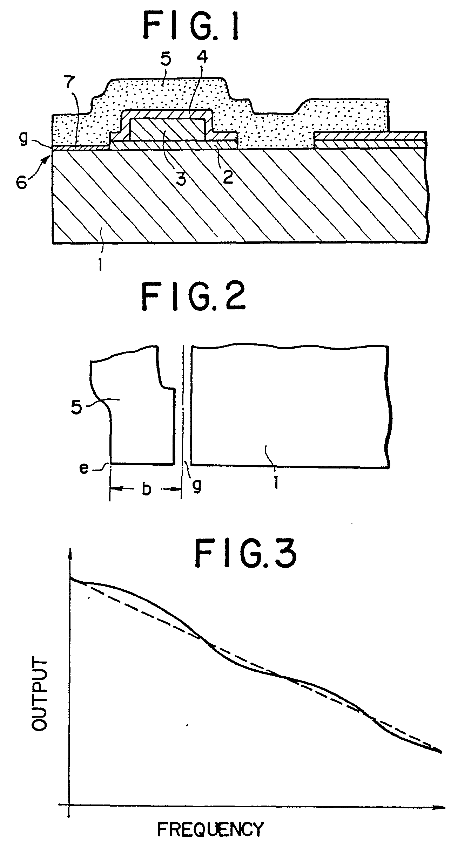

Referring to Fig. 1, a thin film type magnetic transducer head, for example, that of the electromagnetic induction type as disclosed in US—A—4 490 760 comprises a magnetic substrate 1 of Mn—Zn ferrite, a conductive layer 3 as a head winding forming on the magnetic substrate 1 through an insulation layer 2 of $SiO_2$ or $Si_3N_4$, and a magnetic core 5 of permalloy or sendust formed on the conductive layer 3 also through an insulation layer 4 of $SiO_2$ or $Si_3N_4$ so as to cross the conductive layer 3. The front end of the magnetic core 5 extends to an opposite surface 6 facing to a travelling magnetic recording medium, and a gap spacer layer 7 of $SiO_2$ having a prescribed thickness is interposed between the front end of the core 5 and the magnetic substrate 1, and further an effective magnetic gap g with gap length specified by the thickness of the gap spacer layer 7 is faced to the opposite surface 6 to the travelling magnetic recording medium. The rear end of the magnetic core 5 is attached, for example, to the magnetic substrate 1 directly and magnetically connected to the substrate 1 in close connection. Thus, a magnetic circuit comprising the substrate 1, the magnetic gap g, the magnetic core 5 and again the substrate 1 is formed around the conductive layer 3, and the signal magnetic flux from the travelling magnetic recording medium facing to the opposite surface 6 is supplied to the magnetic circuit through the effective magnetic gap g, thereby producing an induction current in the conductive layer 3 forming a head winding for pick-up of the reproduction signal.

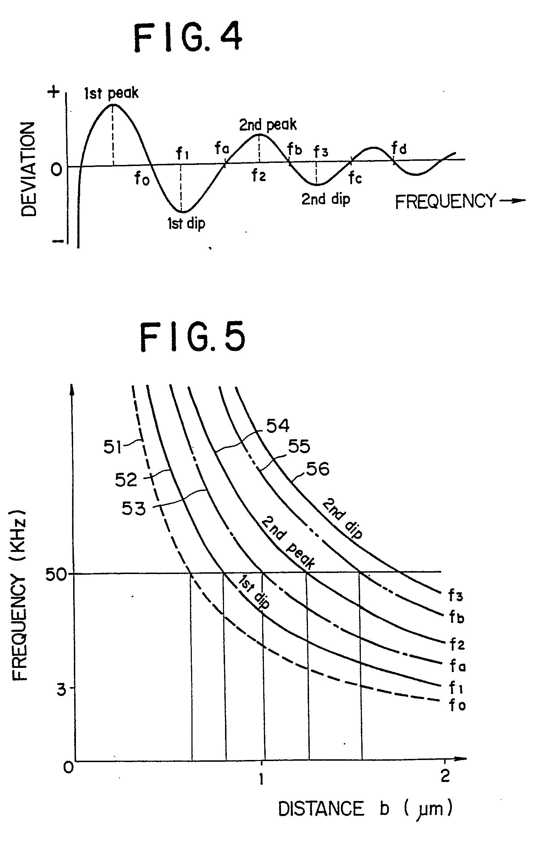

Referring to Fig. 2, the thin film type magnetic transducer head has an effective magnetic gap g as shown schematically. As disclosed by an article in "Electronic Design", Sept. 30, 1981, pp 67—76, typically the gap width may be in the range of 1.0 μm but may be as low as 0.1 μm or less. Since the core length at one core front side opposed through the gap g of the magnetic circuit is specified by the thickness of the magnetic core 5, the core length can be as short as 0.1—10 μm and the frequency characteristics are effected by the shape effect. Although the intrinsic frequency characteristic curve should decrease as shown in broken line of Fig. 3 on account of a spacing loss, the real characteristic curve has a weaving as shown in solid line in Fig. 3. Fig. 4 shows the deviation of the weaving, where frequencies at apexes of the first dip, the second peak, the second dip, ... are designated by $f_1$, $f_2$, $f_3$, ... respectively, and intersections of the weaving at both sides of the dips and the peaks with the convergence level axis (deviation 0) are taken as $f_o$, $f_a$, $f_b$, $f_c$, and the wave length corresponding to these frequencies are taken as $\lambda1$, $\lambda2$, $\lambda3$; $\lambda o$, $\lambda a$, $\lambda b$, $\lambda c$. Each wave length is a value of the relative velocity v of the travelling magnetic recording medium to the magnetic transducer head divided by each frequency.

Since the weaving in the frequency characteristics is a phenomenon caused by the fact that the core length is short for thin film type magnetic transducer heads, this phenomenon occurs irrespective of the detecting mode in a thin film type magnetic head, i.e. either for heads of the electromagnetic induction type or of the magneto-resistance effect type.

It is an object of the present invention to provide a thin film type magnetic transducer head having an improved signal to noise ratio and/or an improved frequency response.

In order to attain the above objects, thin film type magnetic transducer heads according to a first basic embodiment of the invention comprises in combination with a magnetic medium travelling at a relative velocity v to said magnetic transducer head and recordings with a frequency $f_m$ being the frequency half of the transmission rate, said transducer head comprising a magnetic substrate and a thin film magnetic core (5) formed on said substrate providing an effective magnetic gap at one end of said substrate facing to said thin film magnetic core forming a magnetic circuit to reproduce signals on said travelling magnetic medium, wherein a length b and a wave length $\lambda_m = v/f_m$ are satisfying the relation 0.83 $\lambda_m < b < 1.33 \lambda_m$, wherein b is a distance measured along the travelling direction of said magnetic recording medium between a center of said effective magnetic gap and an edge of said magnetic core opposite to an edge facing to said effective magnetic gap.

According to a second principal solution of the invention, a thin film type magnetic transducer head comprises in combination with a magnetic medium travelling at a relative velocity v to said magnetic transducer head and comprising recordings with a frequency $f_m$ being the frequency of half of the transmission rate, said transducer head comprising a magnetic substrate and a thin film magnetic core (5) formed on said substrate providing an effective magnetic gap at one end of said substrate facing to said travelling magnetic recording medium, said magnetic substrate and said thin film magnetic core forming a magnetic circuit to reproduce signals on said travelling magnetic medium, wherein a length b and a wavelength $\lambda_m = v/f_m$ are satisfying the relation 1.06 $\lambda_m < b < 1.61 \lambda_m$, wherein b is a distance measured along the travelling direction of said magnetic recording medium between a center of said effective magnetic gap and an edge of said magnetic core to an edge facing to said effective magnetic gap.

Further details and specific advantages of the invention may be taken from the following description in conjunction with the drawings of which

Fig. 1 is a schematic enlarged sectional view of an example of a thin film type magnetic transducer head illustrating the invention;

Fig. 2 is a diagram illustrating a main part of the thin film type magnetic transducer head;

Fig. 3 is a graph of a frequency characteristic curve of the magnetic transducer head;

Fig. 4 is a graph showing the weaving component of Fig. 3;

Fig. 5 is a graph showing the relation of the frequency in the frequency characteristic curve with respect to the distance between the center of an effective magnetic gap and an edge of a magnetic core;

Fig. 6 is a graph showing the relation of the wave length in the frequency characteristic curve with respect to the distance between the centre of the effective magnetic gap and the edge of the magnetic core; and

Fig. 7 is a graph of a frequency characteristic curve illustrating an example of a magnetic transducer head according to the invention.

For digital magnetic recording, the frequency characteristics should satisfy the following two requirements mainly as electromagnetic converting characteristics for the magnetic recording medium and the magnetic head:

(i) A sufficient S/N ratio should be obtained at a frequency $f_m$.

(ii) The gradient of the frequency characteristics should be gentle at the frequency $f_m$.

The frequency $f_m$ stands for a frequency band in which the highest S/N ratio is required for digital magnetic recording.

In modulation systems of a high density ratio, such as HDM, EFM, FEM, 3PM, the frequency $f_m$ is defined as

$$f_m = \frac{\text{transmission rate (bit number/sec)}}{2}$$

If the above requirement (ii) is satisfied, the eye aperture ratio of an eye pattern of the output after applying an equalizer may be enlarged. This is favorable for the signal processing.

In the present invention, the relation between the core length of a magnetic core in a thin film type magnetic transducer head, i.e. distance b from the center of the effective magnetic gap to an edge of the magnetic core in thickness direction and the weaving of the frequency characteristics is optimized, and the electromagnetic converting efficiency, i.e. output is improved by specifying the distance b.

From frequency characteristics of Fig. 3 and Fig. 4, in order to improve the output by regarding above requirement (i), the invention selects a relation of

$$f_a < f_m < f_b \tag{1}$$

hence

$$\lambda_a > \lambda_m > \lambda_b \tag{1'}$$

Regarding the peaks of the higher harmonics over the third peak, since the amplitude of the weaving attenuates to small values for higher harmonics, the effect of improving the output is small. Moreover, since the distance between the peak and the dip of the weaving becomes small for higher harmonics, the band width contributing to the output improvement becomes small and the utilization of the weaving effect is not advantageous. Consequently, the region of the second peak has been studied.

Regarding the above requirement (ii), since utilization of the positive gradient (derivative) of deviation of the weaving, i.e. the tendency of the output increasing, is favorable, the relation of

$$f_1 < f_m < f_2 \tag{2}$$

hence

$$\lambda_1 > \lambda_m > \lambda_2 \tag{2'}$$

is specified. Also in this case, the peaks at higher harmonics are not advantageous on account of the above-mentioned reason.

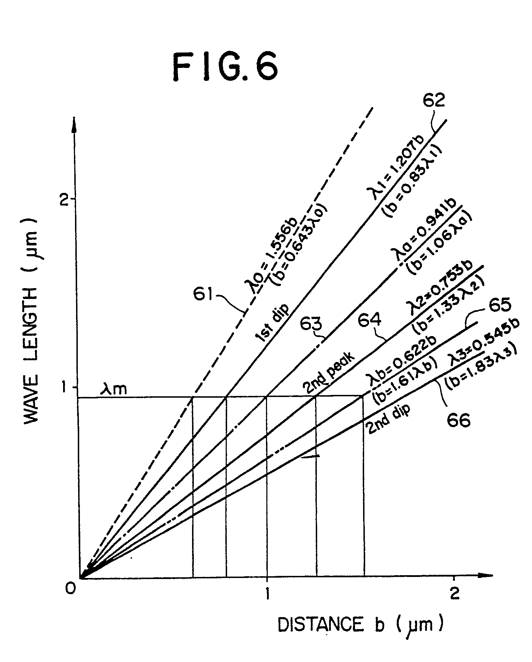

Referring to Fig. 2, if the distance from the center of the effective magnetic gap g to the outside edge e of a magnetic core 5 in thickness direction at the front end surface thereof is designated by b, the relation of the weaving at various positions (frequencies) $f_o$, $f_1$, $f_a$, $f_2$, $f_b$, $f_3$ in Fig. 4 to the distance b can be depicted by curves 51 through 56 of Fig. 5. Also the relation of various wave lengths $\lambda_o$, $\lambda_1$, $\lambda_a$, $\lambda_2$, $\lambda_b$, $\lambda_3$ to the distance b is shown by lines 61 through 66 of Fig. 6. In this case, relative velocity of the magnetic recording medium to the magnetic transducer head is made $v = 4.8$ cm/sec, and the output is determined by estimating the impulse response of the head by means of conformal mapping and transforming the result in Fourier transformation.

With the invention, a relation of frequency and wave length of the weaving to the distance b as shown in Fig. 5 and Fig. 6 is noticed, and the formulas (1) and (1') and (2) and (2') are set by specifying the distance b.

In a first embodiment of the invention, in order to satisfy the above formulas (1), (1') or (2), (2') the thickness of the magnetic core to constitute the magnetic circuit, i.e. the distance b from the center of the effective magnetic gap to the outside edge of the magnetic core at the front end surface, is selected. In a thin film type magnetic transducer head of this embodiment, a magnetic core is attached to a magnetic substrate through a non-magnetic gap spacer to form an effective magnetic gap at one end of the substrate facing to a magnetic recording medium, whereby a magnetic circuit is formed passing through the magnetic core and the magnetic substrate. If the relative velocity of the magnetic recording medium to the magnetic transducer head is designated by v as described above and the maximum frequency of the digital recording or frequency of half of transmission rate is designated by $f_m$, the relation between the wave length $\lambda_m = v/f_m$ and the distance b from center of the magnetic gap to the edge of the magnetic core in thickness direction is represented by

$$0.83\lambda_m < b < 1.61 \lambda_m \qquad (22)$$

Then, as can be seen from Fig. 6, formulas (1), (1′) or (2), (2′) are satisfied. Consequently, the head having the above-mentioned distance b satisfying such conditions is excellent in respect to the S/N ratio and/or the frequency characteristics by utilizing the weaving of the reproduced output.

Particularly, in order to improve the frequency characteristics of the reproduction output, the thickness of the magnetic layer constituting the magnetic circuit, i.e. the distance b from the center of the effective magnetic gap to the outside edge of the magnetic core at the front end surface, is specifically selected. In a thin film type magnetic transducer head of this embodiment, a magnetic core is attached to a magnetic substrate through a non-magnetic gas spacer to form an effective magnetic gap at one end of the substrate facing to a magnetic recording medium, thereby the magnetic circuit is formed passing through the magnetic core and the magnetic substrate. If the relative velocity of the magnetic recording medium to the magnetic transducer head is designated by v and the maximum frequency of the digital recording or the frequency of half of the transmission rate is designated by $f_m$, the relation between the wave length $\lambda_m = v/f_m$ and the distance b from the center of the magnetic gap to the edge of the magnetic core in thickness direction is represented by

$$0.83 \lambda_m < b < 1.33 \lambda_m \qquad (23)$$

Then, as can be seen from Fig. 6, formulas (2), (2′) are satisfied. Consequently, under such conditions, the portion having a positive derivative in the weaving of the frequency characteristics can be utilized substantially.

Particularly, if a head with an excellent S/N ratio is required, the thickness of the magnetic core constituting the magnetic circuit, i.e. the distance b from the center of the effective magnetic gap to the outside edge of the magnetic core at the front end surface, is selected so that the formulas (1), (1′) and (2), (2′′) are satisfied. That is, in a thin film type magnetic transducer head of this embodiment, the magnetic core is attached to a magnetic substrate through a non-magnetic gap spacer to form an effective magnetic gap at one end of the substrate facing to a magnetic recording medium, thereby a magnetic circuit is formed passing through the magnetic core and the magnetic substrate. If the relative velocity of the magnetic recording medium to the magnetic transducer head is designated by v and the maximum frequency of the digital recording or the frequency of half of transmission rate is designated by $f_m$, relation between the wave length $\lambda_m = v/f_m$ and the

distance b from the center of the magnetic gap to the edge of the magnetic core in thickness direction is represented by

$$1.06 \lambda_m < b < 1.61 \lambda_m \qquad (25)$$

Then, as can be seen from Fig. 6, formulas (1), (1′), (2), (2′) are satisfied. Consequently, under such conditions, the portion of an excellent S/N ratio can be utilized in the weaving of frequency characteristics substantially.

For example, if $f_m = 50$ kHz and the relative velocity to the magnetic medium is $v = 4.76$ cm/sec, the wave length becomes $\lambda_m = 0.952$ μm. In Fig. 5 and Fig. 6, if the intersections of curves are determined at the frequency $f_m = 50$ kHz and the wave length is $\lambda_m = 0.952$ μm, the relation becomes

$$0.79 \text{ μm} < b < 1.53 \text{ μm}$$

These correspond to the relation (22). If the distance b is specified as above, the S/N ratio according to requirement (i) is improved and also the frequency characteristics requirement (ii) is satisfied. Also a relation

$$0.79 \text{ μm} < b < 1.26 \text{ μm}$$

can be achieved.

This corresponds to relation (23). If the distance b is specified as above, gentle frequency characteristics are obtained for the frequency $f_m$.

Furthermore, if the distance b is represented by

$$1.01 \text{ μm} < b < 1.53 \text{ μm}$$

the S/N ratio of the magnetic transducer head is improved.

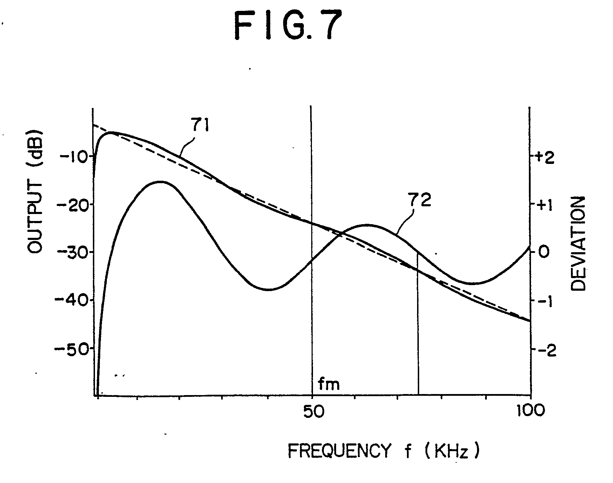

In Fig. 7, numeral 71 designates the frequency characteristic curve when $b = 1.0$ μm, and curve 72 shows the deviation of the weaving component of the curve 71, and the relation becomes $f_m = f_a$ at $f_m = 50$ kHz.

In the present invention as described above, the weaving effect of the frequency characteristics in a thin film type magnetic head are effectively utilized for improving the S/N ratio and the output at the reproduction head in particular for digital magnetic recording.

## Claims

1. A thin film type magnetic transducer head in combination with a magnetic medium travelling at a relative velocity v to said magnetic transducer head and comprising recordings with a frequency $f_m$ being the frequency of half of the transmission rate, said transducer head comprising a magnetic substrate (1) and a thin film magnetic core (5) formed on said substrate providing an effective magnetic gap (g) at one end of said substrate facing to said travelling magnetic recording medium, said magnetic substrate and said thin film magnetic core forming a magnetic circuit to reproduce signals on said travelling magnetic medium, wherein a length b and a wave length $\lambda_m = v/f_m$ are satisfying the relation

$$0.83\,\lambda_m < b < 1.33\,\lambda_m,$$

wherein b is a distance measured along the travelling direction of said magnetic recording medium between a center of said effective magnetic gap (g) and an edge (e) of said magnetic core (5) opposite to an edge facing to said effective magnetic gap.

2. A thin film type magnetic transducer head in combination with a magnetic medium travelling at a relative velocity v to said magnetic transducer head and comprising recordings with a frequency $f_m$ being the frequency of half of the transmission rate, said transducer head comprising a magnetic substrate (1) and a thin film magnetic core (5) formed on said substrate providing an effective magnetic gap (g) at one end of said substrate facing to said travelling magnetic recording medium, said magnetic substrate and said thin film magnetic core forming a magnetic circuit to reproduce signals on said travelling magnetic medium, wherein a length b and a wave length $\lambda_m = v/f_m$ are satisfying the relation

$$1.06\,\lambda_m < b < 1.61\,\lambda_m,$$

wherein b is a distance measured along the travelling direction of said magnetic recording medium between a center of said effective magnetic gap (g) and an edge (e) of said magnetic core (5) opposite to an edge facing to said effective magnetic gap.

## Patentansprüche

1. Magnetwandlerkopf in Dünnschichttechnik und in Zuordnung zu einem magnetischen Aufzeichnungsmedium, das sich gegenüber dem Magnetwandlerkopf mit einer Relativgeschwindigkeit v bewegt und Aufzeichnungen einer Frequenz $f_m$ enthält, die der Frequenz der halben Übertragungsrate entspricht, mit einem magnetischen Substrat (1) und einem auf dem Substrat ausgebildeten Dünnschicht-Magentkern (5), die zusammen an dem den bewegten magnetischen Aufzeichnungsmedium gegenüberliegenden Ende des Substrates einen wirksamen Magnetluftspalt (g) und einen Magnetkreis bilden zur Wiedergabe von auf dem magnetischen Aufzeichnungsmedium gespeicherten Signalen, wobei eine Länge b und eine Wellenlänge $\lambda_m = v/f_m$ folgender Relation genügen:

$$0,83\,\lambda_m < b < 1,33\,\lambda_m$$

worin b den in Bewegungsrichtung des Aufzeichnungsmediums gemessenen Abstand von der Mitte des wirksamen Magnetluftspalts (g) zu der Kante (e) des Magnetkerns (5) bezeichnet, die der zum Magnetluftspalt (g) gerichteten Kante gegenüberliegt.

2. Magnetwandlerkopf in Dünnschichttechnik und in Zuordnung zu einem magnetischen Aufzeichnungsmedium das sich gegenüber dem Magnetwandlerkopf mit einer Relativgeschwindigkeit v bewegt und Aufzeichnungen einer Frequenz $f_m$ enthält, die der Frequenz der halben Übertragungsrate entspricht, mit einem magnetischen Substrat (1) und einem auf dem Substrat ausgebildeten Dünnschicht-Magentkern (5), die zusammen an dem den bewegten magnetischen Aufzeichnungsmedium gegenüberliegenden Ende des Substrates einen wirksamen Magnetluftspalt (g) und einen Magnetkreis bilden zur Wiedergabe von der auf dem magnetischen Aufzeichnungsmedium gespeicherten Signalen, wobei ein Länge b und eine Wellenlänge $\lambda_m = v/f_m$ folgender Relation genügen:

$$1,06\,\lambda_m < b < 1,61\,\lambda_m,$$

worin b den in Bewegungsrichtung des Aufzeichnungsmediums gemessenen Abstand von der Mitte des wirksamen Magnetluftspalts (g) zu der Kante (e) des Magnetkerns (5) bezeichnet, die der zum Magnetluftspalt (g) gerichteten Kante gegenüberliegt.

## Revendications

1. Une tête de transducteur magnétique du type à couche mince, en combinaison avec un support d'enregistrement magnétique se déplaçant à une vitesse relative v par rapport à la tête de transducteur magnétique, et portant des enregistrements dans lesquels une fréquence $f_m$ est la fréquence correspondant à la moitié de la cadence de transmission, cette tête de transducteur comprenant un substrat magnétique (1) et un élément de circuit magnétique à couche mince (5) formé sur le substrat, définissant un entrefer magnétique effectif (g) à une extrémité du substrat, faisant face au support d'enregistrement magnétique en mouvement, ce substrat magnétique et cet élément de circuit magnétique à couche mince formant un circuit magnétique pour reproduire des signaux présents sur le support d'enregistrement magnétique en mouvement, dans laquelle une longueur b et une longueur d'onde $\lambda_m = v/f_m$ satisfont la relation:

$$0,83\,\lambda_m < b < 1,33\,\lambda_m$$

dans laquelle b est une distance mesurée dans la direction de déplacement du support d'enregistrement magnétique, entre le centre de l'entrefer magnétique effectif (g) et un bord (e) de l'élément de circuit magnétique (5) qui est opposé à un bord faisant face à l'entrefer magnétique effectif.

2. Une tête de transducteur magnétique du type à couche mince en combinaison avec un support d'enregistrement magnétique se déplaçant à une vitesse relative v par rapport à la tête de transducteur magnétique, et portant des enregistrements dans lesquels une fréquence $f_m$ est la fréquence correspondant à la moitié de la cadence de transmission, cette tête de transducteur comprenant un substrat magnétique (1) et un élément de circuit magnétique à couche mince (5) formé sur le substrat, définissant un entrefer magnétique effectif (g) à une extrémité du substrat qui fait face au support d'enregistrement magnétique en mouvement, le substrat magnétique et l'élément de circuit magnétique à couche mince formant un circuit magnétique destiné à reproduire des signaux présents sur le support d'enregistrement magnétique en mouvement, dans laquelle une longueur b et une longueur d'onde $\lambda_m = v/f_m$ satisfont la relation:

$$1{,}06 \, \lambda_m < b < 1{,}61 \, \lambda_m$$

dans laquelle b est une distance mesurée dans la direction de déplacement du support d'enregistrement magnétique, entre le centre de l'entrefer magnétique effectif (g) et un bord (e) de l'élément de circuit magnétique (5) qui est opposé à un bord faisant face à l'entrefer magnétique effectif.

# FIG.1

# FIG.2

# FIG.3

OUTPUT

FREQUENCY

# FIG. 4

DEVIATION

+

0

−

1st peak

2nd peak

$f_1$  $f_a$     $f_b$  $f_3$     $f_d$

$f_0$         $f_2$        $f_c$

1st dip

2nd dip

FREQUENCY →

# FIG. 5

FREQUENCY (KHz)

51

52

53

54

55

56

2nd dip

2nd peak

1st dip

50

3

$f_3$

$f_b$

$f_2$

$f_a$

$f_1$

$f_0$

0                    1                    2

DISTANCE  b  (μm)

# FIG.6

# FIG.7